# EUROPÄISCHE PATENTSCHRIFT

(11) **EP 2 034 594 B1**
(45) Veröffentlichungstag und Bekanntmachung des Hinweises auf die Patenterteilung: **29.09.2021**
(21) Anmeldenummer: 08014440.5
(22) Anmeldetag: 13.08.2008
(51) Int. Cl.: H02K 41/035

(54) **Elektromagnetischer Linearmotor**
Electromagnetic linear motor
Moteur linéaire électromagnétique

(30) Priorität: 16.08.2007 DE 102007038862
(43) Veröffentlichungstag der Anmeldung: 11.03.2009
(73) Patentinhaber: ViZaar AG, 72461 Albstadt (DE)
(72) Erfinder: Schrader, Stephan, Dr., 14532 Klein Machnow (DE); Zaar, Kersten, 72461 Albstadt (DE)
(74) Vertreter: Geitz Truckenmüller Lucht Christ

(56) Entgegenhaltungen:
- JP-A- 2003 174 759
- US-A1- 2002 158 727
- US-A1- 2006 108 878
- US-A1- 2006 226 713

## Beschreibung

### Stand der Technik

Die Erfindung geht aus von einem elektromagnetischen Linearmotor, der einen Startor mit mindestens einer Magnetspule und einen Läufer mit mindestens einem Permanentmagneten aufweist.

Im Gegensatz zu Rotationsantrieben versetzt ein Linearmotor die mit ihm verbundenen Objekte nicht in eine drehende sondern in eine geradlinige Bewegung, welche auch als Translationsbewegung bezeichnet wird. Der Linearmotor ist mit einem länglichen Stator und einem relativ zum Stator linear verschiebbaren Läufer ausgestattet. Stator oder Läufer weisen mindestens eine Magnetspule auf. Der jeweils nicht mit einer Magnetspule ausgestattete Teil weist in der Regel einen Permanentmagneten auf. Der Läufer wird im Stator durch axial wirkende Lorentz- oder Reluktanzkräfte zu einer Translationsbewegung angeregt.

Derartige Linearmotoren werden beispielsweise in optischen Systemen mit kleinem Baumaß zum Verschieben der optischen Komponenten wie Linsen, Prismen, Spiegel, Blende oder CCD-Chip eingesetzt. Sie finden damit Anwendung in Kameras, Endoskopen und anderen optischen Instrumenten. Aufgrund ihres Einsatzgebietes haben die Linearmotoren die Anforderungen zu erfüllen, dass sich die Komponenten möglichst exakt positionieren lassen, die Positionierung innerhalb eines möglichst großen Bereiches stattfinden kann, der Strahlengang beim Verschieben der Komponenten nicht blockiert wird und nach Möglichkeit keine oder allenfalls eine geringfügige Erwärmung aufgrund der durch den Linearmotor freigesetzten Wärmeenergie stattfindet.

Aus dem Stand der Technik der DE 37 17 872 C2 ist ein elektromagnetischer Linearmotor auf Basis der Reluktanzkraft mit kontinuierlich positionierbarem Läufer für die Anwendung in optischen Systemen bekannt. Der Stator besteht aus einem Rohr aus Weicheisen, in dem zwei in Reihe geschaltete Spulen angeordnet sind. Zwischen den Spulen befindet sich ein radial magnetisierter ringförmiger Permanentmagnet. Der Läufer ist mit zwei durch einen Spalt getrennten ferromagnetischen Rohren ausgestattet. Im stromlosen Zustand bewirken die Reluktanzkräfte, dass der Läufer in der symmetrischen Mittelposition angeordnet ist, in der der Spalt zwischen den beiden ferromagnetischen Rohren der Mitte des Permanentmagnets gegenüberliegt. In dieser Position ist der magnetische Widerstand am geringsten. Fließt durch die beiden Spulen ein Strom, so bewegt sich der Läufer in axialer Richtung in Abhängigkeit davon, welche auf ihn ausgeübte Kraft am größten ist. Der Nachteil dieses Linearmotors besteht darin, dass der mit zwei Spulen und einem Permanentmagneten ausgestattete Stator ein großes Baumaß aufweist und daher bei optischen Systemen mit möglichst kleinem Außenmaß nicht eingesetzt werden kann. Dabei erweist sich ferner als nachteilig, dass der Magnet in radialer Richtung magnetisiert ist, so dass zur Verlängerung des Magneten in Feldrichtung eine Vergrößerung des Motordurchmessers erforderlich ist.

Aus der DE 196 18 355 A1 ist ein Endoskop mit elektromagnetischem Linearmotor bekannt, der auf dem Tauchspulenprinzip beruht. Dabei ist der rohrförmige Stator mit einer bifilaren Wicklung ausgestattet. Eine in dem Stator gleitende Hülse weist einen Permanentmagneten auf, der in axialer Richtung magnetisiert ist. Fließt durch die bifilare Wicklung ein Strom, so wirken auf den Permanentmagneten magnetische Kräfte, die für eine Beschleunigung des Permanentmagneten in axialer Richtung sorgen. Als nachteilig erweist sich, dass eine eindeutige Zuordnung oder Feststellung der Position des Permanentmagneten allein mit Hilfe des Linearmotors nicht möglich ist. Zur Positionsbestimmung muss der Linearmotor mit einem zusätzlichen Sensor ausgestattet werden. Soll der Permanentmagnet ferner an einer fest vorgegebenen Position anhalten, so ist die Einbettung des Linearmotors in eine Regelschleife erforderlich.

Aus der DE 103 23 629 A1 ist ein elektromagnetischer Wanderfeld-Linearmotor mit einem Stator mit mindestens drei Magnetspulen bekannt. Jede der drei Magnetspulen wird mit Strom versorgt, wobei zwischen den drei Phasen eine Phasenverschiebung von 120° besteht. Zwar ermöglicht dieser Linearmotor die eindeutige Zuordnung und Vorgabe einer Läuferposition, jedoch weist er den Nachteil einer aufwendigen Strom- beziehungsweise Spannungsversorgung und eines großen Baumaßes auf. Das Baumaß wird durch die Länge des Stators mit den drei Magnetspulen vorgegeben und kann daher nicht beliebig reduziert werden.

Die JP 2003 174 759 A offenbart einen magnetischen Antrieb mit einem Stator und einem Läufer. Der Stator ist mit zwei Spulen ausgestattet. Der Läufer umfasst einen Permanentmagneten. Die beiden Spulen des Stators sind als Luftspulen ausgebildet, die in axialer Richtung hintereinander angeordnet sind. Die Wicklungen der beiden Spulen sind auf zwei getrennte Spulenkörper aufgebracht. Zwischen den beiden Spulen ist ein Kern aus einem weichmagnetischen Material derart angeordnet, dass er denselben Innendurchmesser aufweist wie die beiden Luftspulen. Die Wicklungsrichtung der beiden Spulen ist unterschiedlich, so dass der magnetische Fluss entgegengesetzt gerichtet ist. Aufgrund dieser Anordnung der Spulen addieren sich die Kräfte, die die beiden Spulen auf den Läufer ausüben. Darüber hinaus werden die Magnetisierungen der beiden stromdurchflossenen Spulen so vorgegeben, dass sie größer sind, als die Magnetisierung des Permanentmagneten. Dies führt dazu, dass der Kern durch die Spulen magnetisiert wird und ebenfalls eine magnetische Kraft auf den Läufer ausübt, so dass auf den Läufer eine besonders große Kraft und Beschleunigung wirkt.

Die US 2006/108878 A1 offenbart einen Linearmotor mit Stator und Läufer. Der Stator weist einen ringförmigen Kern aus weichmagnetischen Material auf. Der Kern besteht aus zwei Teilen. Jeder Teil ist mit einem radial nach innen vorstehenden Vorsprung ausgestattet. Zwischen den beiden Vorsprüngen des Kerns befindet sich ein Schlitz, in dem eine Spule angeordnet ist. Mehrere Kerne sind in axialer Richtung nacheinander angeordnet und bilden den Stator. Der Läufer weist ein Rohr aus weichmagnetischem Material und mindestens einen daran angeordneten Permanentmagneten auf.

Gegenstand der US 2002/158727 A1 (die den Oberbegriff des Anspruchs 1 zeigt) ist ein Aktuator mit einem länglichen Stator mit einem in axialer Richtung verlaufenden Hohlraum und einer Magnetspule sowie mit einem in dem Stator linear beweglichen Läufer mit Permanentmagnet. An seinen beiden Enden weist der Stator Weicheisenjoche als Endanschläge auf. Aufgrund der beiden Weicheisenjoche weist der Läufer bei stromloser Spule zwei stabile Endstellen auf. Eine exakte Positionierung entlang des Verschiebewegs ist bei dem Aktuator nicht vorgesehen, da es nur auf die beiden stabilen Endstellungen ankommt. Bei stromloser Spule verbleibt der Läufer nicht an der gerade eingenommenen Position, sondern nimmt in jedem Fall eine der beiden stabilen Endstellungen durch Haftung der Polplatten des Permanentmagneten an den Weicheisenjochen ein. Die Verschiebekraft des Aktuators ist hoch, damit eine möglichst sichere Ver- und Entriegelung des Aktuators in den Endstellungen gewährleistet wird. Der Aktuator wird eingesetzt um bewegliche Komponenten mittels einer Fernbedienung in zwei vorgegebenen Endstellungen zu verriegeln und eine Bewegung der Komponenten von einer ersten Endstellung in eine zweite Endstellung zu ermöglichen.

Der Erfindung liegt die Aufgabe zugrunde, einen elektromagnetischen Linearmotor zur Verfügung zu stellen, der eine exakte Positionierung des Läufers an beliebigen Positionen innerhalb eines Verschiebewegs ermöglicht, mit einer einphasigen elektrischen Ansteuerung auskommt, der derart miniaturisierbar ist, dass sein Einsatz in Endoskopen möglich ist, der eine kleine axiale Länge im Verhältnis zu seinem Durchmesser aufweist, und der ferner einfach und kostengünstig herzustellen ist.

### Die Erfindung und ihre Vorteile

Gegenüber den aus dem Stand der Technik bekannten Linearmotoren weist der erfindungsgemäße Linearmotor mit den Merkmalen des Anspruchs 1 den Vorteil auf, dass der Stator mit einem aus einem zylindrischen Körper aus einem weichmagnetischen Material ausgestattet ist, der in axialer Richtung eine variable Form aufweist. Durch den Hohlkörper verläuft in axialer Richtung ein Hohlraum, dessen Querschnitt in axialer Richtung variiert. Hierzu weist der zylindrische Körper an seinen beiden Enden jeweils einen Abschnitt auf, die als erster und zweiter Abschnitt bezeichnet werden. Zwischen diesen beiden Abschnitten ist genau ein dritter Abschnitt des Hohlkörpers vorgesehen, bei dem der Querschnitt des Hohlraums kleiner ist als in dem ersten und dem zweiten Abschnitt. Hierzu weist der Hohlkörper beispielsweise einen in Richtung des Läufers ragende Abschnitte auf, die den Abstand zwischen dem weichmagnetischen Hohlkörper des Stators einerseits und dem Läufer andererseits zumindest abschnittsweise reduzieren. Diese Ausgestaltung des Stators führt dazu, dass der magnetische Widerstand eines Magnetkreises, welcher durch die Magnetspule des Stators, den Permanentmagneten des Läufers und Abschnitte des weichmagnetischen Hohlkörpers gebildet wird, mit der Position des Läufers in axialer Richtung variiert. Dabei werden Reluktanzkräfte in axialer Richtung erzeugt, die den Läufer in eine stabile Vorzugsposition zwingen. Fließt kein Strom durch die Magnetspule, so nimmt der Permanentmagnet in axialer Richtung diejenige Position ein, in der der magnetische Widerstand am geringsten und die axiale Reluktanzkraft Null ist. Der Läufer befindet sich damit in einer Position nahe des dritten Abschnitts beispielsweise in axialer Richtung in der Mitte des Hohlkörpers. Diese Position bei stromloser Magnetspule ist eindeutig. Es gibt nur eine derartige Position. Sie kann als Ausgangsposition bezeichnet werden. Fließt dagegen ein Strom durch die Magnetspule, so überlagern sich die Reluktanzkraft und die zusätzlich wirkende Lorentzkraft. Dies führt zu einer Auslenkung des Permanentmagneten, wobei die Bewegungsrichtung durch die Richtung des elektrischen Stroms vorgegeben ist und die Auslenkung von der Stromstärke abhängt. Somit besteht eine eindeutige Zuordnung zwischen der Position des Läufers und der Stromstärke der Magnetspule. Die Stromstärke ist gering, so dass sich Lorentzkraft und Reluktanzkraft an einer Position des Läufers innerhalb des Stators gegenseitig aufheben. Der Fall, dass die Lorentzkraft größer ist als die Reluktanzkraft wird bewusst vermieden, da dies eine exakte und reproduzierbare Positionierung des Läufers in Abhängigkeit von der Stromstärke ausschließen würde. Aufgrund der geringen Stromstärke findet nahezu keine oder allenfalls eine sehr geringe Erwärmung des Linearmotors statt.

Der Permanentmagnet lässt sich somit bei Vernachlässigung von Reibung kontinuierlich und exakt positionieren. An derjenigen axialen Position, an der sich Reluktanzkraft und Lorentzkraft aufheben, nimmt der Läufer eine stabile Ruheposition ein. Diese wird durch die Stromstärke vorgegeben. Die aus Reluktanzkraft und Lorentzkraft resultierende Haltekraft stabilisiert den Läufer in seiner Position, so dass diese auch bei Einwirkung äußerer Kräfte erhalten bleibt. Der Linearmotor kann daher gedreht oder geschüttelt werden, ohne dass der Läufer seine Ruheposition verändert.

Der erfindungsgemäße Linearmotor ermöglicht die exakte Einstellung des Läufers relativ zum Stator an jeder beliebigen Position. Damit sind in dem vorgegebenen Bereich an Positionen nicht nur einzelne diskrete Einstellungen oder eine schrittweise Verschiebung möglich.

Der erfindungsgemäße Linearmotor zeichnet sich durch seinen einfachen Aufbau mit einem Minimum an Bauteilen aus. Dies führt zum einen zu einem geringen Fertigungs- und Montageaufwand und zum anderen zu einem kleinen Baumaß des Linearmotors. Er eignet sich damit zum Einsatz in kleinen optischen Systemen wie beispielsweise Endoskopen. Je nach Anwendungsfall genügt eine kleine Baulänge des Linearantriebs. Zur Bestromung der Magnetspule genügt im Gegensatz zu den mehrphasigen Wanderfeld-Linearmotoren eine einzige Spannungsphase.

Der Verlauf der Reluktanzkraft in Abhängigkeit von der axialen Position des Permanentmagneten lässt sich durch die geometrische Form des Stators und durch lokale magnetische Werkstoffeigenschaften des Stators beeinflussen. Die Lorentzkraft wird im wesentlichen durch die Spule bestimmt. Bei geeigneter Vorgabe der Parameter kann eine nahezu lineare Abhängigkeit der Position des Permanentmagneten von der Stromstärke erzielt werden.

Die Spule besteht in bevorzugter Weise aus isoliertem Kupferdraht. Sie lässt sich entweder auf einen Spulenkörper wickeln oder als selbsttragende Spule aus Backlackdraht anfertigen. Letztere Ausführungsform ist insbesondere bei der Miniaturisierung des Linearmotors vorteilhaft, da der Wickelkörper und der dafür benötigte Bauraum entfällt. Als Werkstoffe für den Permanentmagneten sind bei Kleinstantrieben Legierungen mit höchsten Energiedichten wie beispielsweise Neodym-Eisen-Bor oder Samarium-Kobalt geeignet. In bevorzugter Weise bestehen die Bauteile, die der Führung des magnetischen Flusses dienen, wie beispielsweise der Stator, aus weichmagnetischem Material mit hoher magnetischer Permeabilität und Sättigung. Je nach geometrischer Größe und Auslegung können Werkstoffe wie einfacher Baustahl bis hin zu ferromagnetischen Legierungen mit definierten magnetischen Eigenschaften eingesetzt werden.

Nach einer vorteilhaften Ausgestaltung der Erfindung ist die Magnetspule an dem ersten oder dem zweiten Abschnitt des zylindrischen Hohlkörpers angeordnet. Sie kann sich gegebenenfalls auch an weiteren Abschnitten des Hohlkörpers befinden, bei denen der Querschnitt des Hohlraums kleiner ist als im dritten Abschnitt. In allen genannten Fällen befindet sie sich nicht im Bereich des dritten Abschnitts, und hat damit keinen Einfluss auf die Querschnittsverengung des Hohlraums im dritten Abschnitt.

Nach einer weiteren vorteilhaften Ausgestaltung der Erfindung ist der weichmagnetische, zylindrische Hohlkörper als Rohr mit kreisförmigem Querschnitt ausgebildet und wird bevorzugt als Statorrückschlussrohr bezeichnet. Der Permanentmagnet weist in bevorzugter Weise ebenfalls eine zylindrische Form auf. Dieser rotationssymmetrische Aufbau hat den Vorteil eines besonders kleinen Baumaßes und einer optimalen Führung des als Läufer wirkenden Permanentmagneten in dem Stator. Die optischen Komponenten oder sonstige Bauteile sind in vorteilhafter Weise in einem Hohlraum des Permanentmagneten angeordnet. Sie sind dabei durch den Permanentmagneten und den Stator vor der Einwirkung äußerer Kräfte geschützt.

Der dritte Abschnitt des zylindrischen Hohlkörpers weist einen ringförmigen Statorpolschuh auf, der mit axialem Abstand zu der Magnetspule an der Innenseite des zylindrischen Hohlkörpers angeordnet ist oder einstückig mit dem Hohlkörper ausgebildet ist. Der Statorpolschuh erstreckt sich in axialer Richtung weiter in den Hohlraum hinein als die übrige dem Hohlraum zugewandte Oberfläche des zylindrischen Hohlkörpers. Der Statorpolschuh bildet damit einen Vorsprung an der Innenseite des Hohlkörpers. Der als runde Wölbung oder mit Kanten ausgestattete Vorsprung weist beispielsweise einen halbkreisförmigen, rechteckigen, trapezförmigen oder dreieckigen Querschnitt auf. An Stelle eines durchgängigen Ringes können auch einzelne voneinander getrennte Absätze oder Abschnitte vorgesehen sein. Der Statorpolschuh kann entweder einstückig mit dem Hohlkörper ausgebildet oder als separates Bauteil in den Hohlkörper eingesetzt sein.

Nach einer weiteren vorteilhaften Ausgestaltung der Erfindung sind das Statorrückschlussrohr und der ringförmige Statorpolschuh koaxial zueinander angeordnet. Gemeinsam bilden sie eine rotationssymmetrische Einheit.

Nach einer weiteren vorteilhaften Ausgestaltung der Erfindung ist der Statorpolschuh aus einem weichmagnetischen Material hergestellt. Er lässt sich damit zusammen mit dem weichmagnetischen Hohlkörper durch die Magnetfelder der Magnetspule und des Permanentmagneten leicht magnetisieren und verstärkt die äußeren Magnetfelder um die Werkstoffpermeabilität. Der magnetische Widerstand wird dadurch reduziert. Vorteilhafterweise besteht der Statorpolschuh aus demselben Material wie der zylindrischen Hohlkörper.

Nach einer weiteren vorteilhaften Ausgestaltung der Erfindung weist der dritte Abschnitt eine höhere magnetische Permeabilität auf als alle anderen Abschnitte des Hohlkörpers, insbesondere als der erste und der zweite Abschnitt des Hohlkörpers. Der magnetische Widerstand wird dadurch im stromlosen Zustand der Magnetspule zusätzlich minimiert.

Im Hohlraum des zylindrischen Hohlkörpers ist ein Hüllrohr angeordnet, welches aus einem nicht-ferromagnetischen Material besteht. Die Wicklungen der Magnetspule sind um dieses Hüllrohr gewickelt. Das Hüllrohr dient zur Aufnahme und axialen Gleitführung des Permanentmagneten. Ein Verkanten des Permanentmagneten an der einen Vorsprung bildenden Magnetspule oder an den Statorpolschuhen wird dadurch vermieden. Der Statorpolschuh ist zwischen dem Hohlkörper und dem Hüllrohr angeordnet. Der Statorpolschuh füllt dabei den Hohlraum zwischen dem Hohlkörper und dem Hüllrohr zumindest teilweise aus und überbrückt dabei den Luftspalt zwischen dem Hohlkörper und Hüllrohr.

Nach einer weiteren vorteilhaften Ausgestaltung der Erfindung sind an dem Läufer weichmagnetische Läuferpolschuhe angeordnet. Sie befinden sich in bevorzugter Weise an den axialen Enden des Permanentmagneten des Läufers. Die Läuferpolschuhe tragen zu einer effizienten Nutzung des durch die Magnetspule erzeugten elektromagnetischen Feldes bei.

Nach einer weiteren vorteilhaften Ausgestaltung der Erfindung ist der Läufer mit einem zweiten Permanentmagneten mit axialer Magnetisierung ausgestattet. Dieser trägt zur Steigerung der Lorentzkraft bei.

Nach einer weiteren vorteilhaften Ausgestaltung der Erfindung weist der Läufer in axialer Richtung einen Hohlraum zur Aufnahme von Bauteilen wie beispielsweise optischen Komponenten auf. Dieser Hohlraum kann beispielsweise in dem Permanentmagneten vorgesehen sein. In bevorzugter Weise hat der Permanentmagnet hierzu die Form eines Rings oder Rohrs.

Vorteilhafterweise können die Merkmale des elektromotorischen Antriebs mit Querschnittsverengung im dritten Abschnitt mit der variablen Magnetisierung kombiniert sein.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung sind mehre Ausführungsbeispiele eines erfindungsgemäßen Linearmotors dargestellt. Es zeigen:
- Figur 1: erstes Ausführungsbeispiel eines Linearmotors im Längsschnitt,
- Figur 2: zweites Ausführungsbeispiel eines Linearmotors im Längsschnitt,
- Figur 3: nicht erfindungsgemäßer Linearmotor im Längsschnitt,
- Figur 4: weiterer nicht erfindungsgemäßer Linearmotor im Längsschnitt.

### Beschreibung der Ausführungsbeispiele

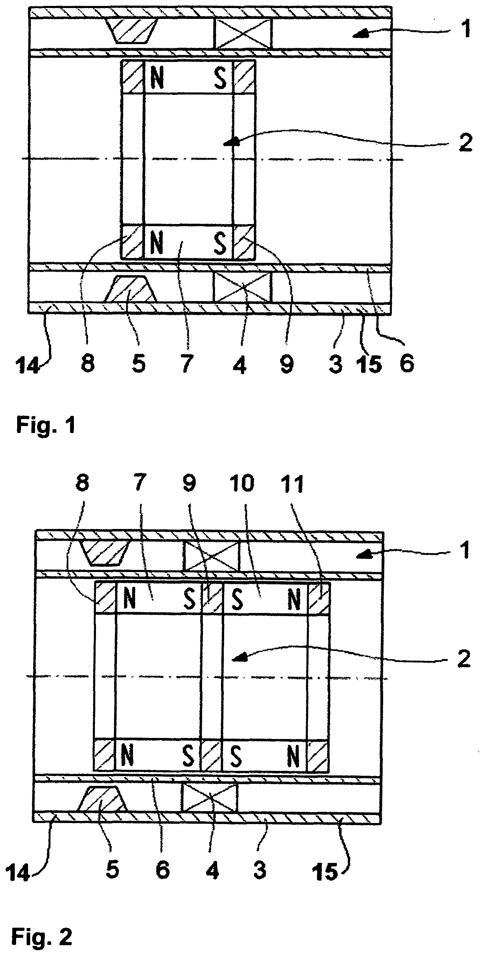

In Figur 1 ist ein erstes Ausführungsbeispiel eines Linearmotors im Längsschnitt dargestellt. Die Schnittebene verläuft dabei durch die Mitte des Linearmotors. Der Linearmotor besteht aus einem Stator 1 und einem Läufer 2. Der Stator 1 ist mit einem weichmagnetischen, zylindrischen Hohlkörper ausgestattet, welches im folgenden als Statorrückschlussrohr 3 bezeichnet wird. Ferner weist der Stator eine Magnetspule 4, einen Statorpolschuh 5 und ein Hüllrohr 6 auf. Statorrückschlussrohr 3 und Statorpolschuh 5 bestehen aus demselben weichmagnetischen Material. Die Wicklungen der Magnetspule 4 winden sich um das Hüllrohr 6. Dieses besteht aus einem nicht ferromagnetischem Material. Der Statorpolschuh 5 bildet einen Ring und weist einen trapezförmigen Querschnitt auf. Er berührt das Statorrückschlussrohr 3 und weist einen Abstand zu dem Hüllrohr 6 auf. Der Läufer 2 weist einen Permanentmagneten 7 und Läuferpolschuhe 8 und 9 auf, welche an den axialen Enden des Permanentmagneten angeordnet sind. Die beiden Läuferpolschuhe 8 und 9 bestehen ebenfalls aus einem weichmagnetischem Material.

Der Permanentmagnet 7 ist in axialer Richtung magnetisiert. Sein Nordpol ist in der Zeichnung mit N gekennzeichnet und sein Südpol mit S. Der magnetische Kreis im Linearmotor verläuft ausgehend von dem Nordpol des axial magnetisierten Permanentmagneten 7 durch den linken Läuferpolschuh 8 über einen kleinen radialen Luftspalt in den Statorpolschuh 5 und das Statorrückschlussrohr 3, von dort in die ringförmige Magnetspule 4 über den rechten Läuferpolschuh 9 in den Südpol des Permanentmagneten 7. Jeder Luftspalt innerhalb der Magnetkreises wirkt als magnetischer Widerstand. Der Widerstand nimmt mit der Länge des Luftspaltes zu. Der Läufer 2 richtet sich daher in dem Stator 1 so aus, dass die Luftspalte innerhalb des Magnetkreises möglichst klein sind, um den magnetischen Widerstand zu reduzieren und in den energetisch günstigsten Zustand zu gelangen. Sogenannte Reluktanzkräfte bewirken die Anziehung der Endflächen von magnetisch leitenden Werkstoffen, die einen Luftspalt einschließen. In Figur 1 ist der energetisch günstigste Zustand des Läufers 2 dargestellt, solange kein Strom in der Magnetspule 4 fließt. Der Läufer 2 befindet sich in der stabilen Ausgangsposition, in die ihn die Reluktanzkraft zwingt. Fließt dagegen durch die Magnetspule 4 ein Strom, so wirkt zusätzlich zu der Reluktanzkraft eine Lorentzkraft und sorgt für eine Auslenkung des Läufers 2 aus der Ausgangsposition. Der Läufer wird soweit axial verschoben, bis sich Reluktanzkraft und Lorentzkraft gegenseitig aufheben. Durch Umkehrung der Stromrichtung kann der Läufer 2 in die entgegengesetzte Richtung ausgelenkt werden. Sobald der Strom abgeschaltet wird, kehrt der Läufer 2 in die in Figur 1 dargestellte stabile Ausgangsposition zurück. Die Strecke, um die der Läufer 2 aus seiner Ausgangsposition ausgelenkt wird, hängt von der Stromstärke ab. Durch Variation der Stromstärke der Magnetspule kann damit innerhalb eines vorgegebenen Verschiebewegs jede beliebige axiale Position des Läufers eingestellt werden. Solange die Stromstärke nicht verändert wird, verbleibt der Läufer 2 in der zugehörigen Position. Die Position ist auch bei Einwirkung äußerer Kräfte stabil.

In Figur 2 ist ein zweites Ausführungsbeispiel eines Linearmotors im Halbschnitt beziehungsweise Längsschnitt dargestellt. Dieser Linearmotor unterscheidet sich vom ersten Ausführungsbeispiel dadurch, dass ein zweiter axial magnetisierten Permanentmagnet 10 und einer dritter Läuferpolschuh 11 vorgesehen sind. Der zweite Permanentmagnet 10 ist in entgegengesetzter Richtung polarisiert wie der erste Permanentmagnet 7. Bei gleich großen Permanentmagneten 7 und 10 verläuft durch den mittleren Polschuh 9 etwa der doppelte magnetische Fluss wie durch die beiden äußeren Polschuhe 8 und 11. Während der magnetische Fluss durch den Statorpolschuh 5 und damit die Reluktanzkraft nahezu unverändert bleibt, wird die Lorentzkraft gegenüber dem Linearmotor gemäß erstem Ausführungsbeispiel nahezu verdoppelt. Eine weitere Steigerung lässt sich durch eine zusätzliche Magnetspule erzielen, die in der in Figur 2 dargestellten Ausgangsposition auf der Höhe des dritten Läuferpolschuhs 11 positioniert ist. Dies ist in der Zeichnung nicht dargestellt.

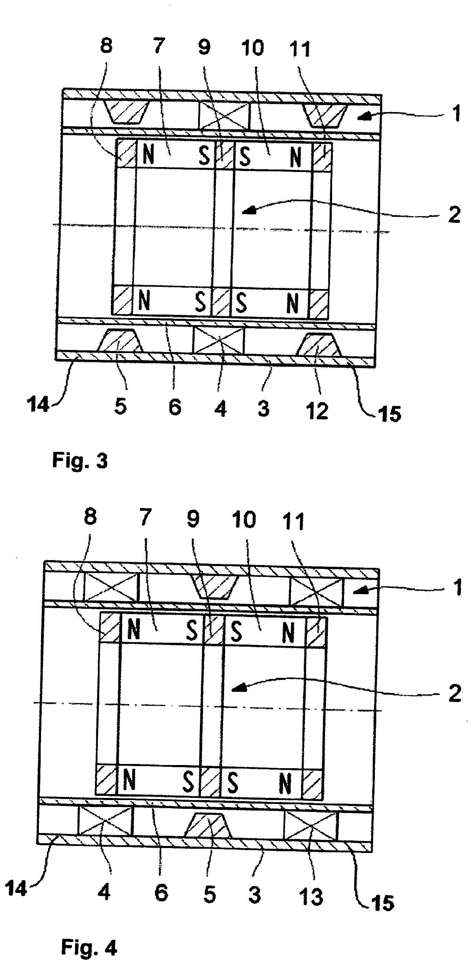

Figur 3 zeigt einen nicht erfindungsgemäßen Linearmotor. Dieses gleicht im wesentlichen dem zweiten Ausführungsbeispiel gemäß Figur 2. Im Unterschied zu dem zweiten Ausführungsbeispiel wurde bei dem dritten Ausführungsbeispiel ein zweiter Statorpolschuh 12 hinzugefügt, der in axialer Richtung den gleichen Abstand zur Magnetspule 4 aufweist wie der erste Statorpolschuh 5. Er befindet sich jedoch auf der dem ersten Statorpolschuh 5 abgewandten Seite der Magnetspule 4. Durch den zusätzlichen Statorpolschuh 12 wird die Reluktanzkraft vergrößert. Entsprechendes gilt für einen Aufbau mit zwei Magnetspulen, die um einen zentral angeordneten Statorpolschuh positioniert sind. Ein derartiger nicht erfindungsgemäßer Linearmotor ist in Figur 4 dargestellt. Die zweite Magnetspule trägt die Bezugsziffer 13.

Dem ersten und zweiten Ausführungsbeispielen ist gemeinsam, dass das Statorrückschlussrohr 3 an seinen beiden Enden in axialer Richtung einen ersten Abschnitt 14 und einen zweiten Abschnitt 15 aufweist, deren Innendurchmesser größer ist als der Innendurchmesser des Statorpolschuhs 5.

Der Statorpolschuh 5 bildet dabei den dritten Abschnitt des Statorrückschlussrohrs 3. Aus dem kleineren Innendurchmesser des Statorpolschuhs resultiert ein kleinerer Querschnitt des Hohlraums des Statorrückschlussrohrs 3 im dritten Abschnitt.

### Bezugszahlenliste

- 1: Stator
- 2: Läufer
- 3: Statorrückschlussrohr
- 4: Magnetspule
- 5: Statorpolschuh
- 6: Hüllrohr
- 7: Permanentmagnet
- 8: Läuferpolschuh
- 9: Läuferpolschuh
- 10: zweiter Permanentmagnet
- 11: Läuferpolschuh
- 12: zweiter Statorpolschuh
- 13: zweite Magnetspule
- 14: erster Abschnitt des Statorrückschlussrohrs
- 15: zweiter Abschnitt des Statorrückschlussrohrs

## Patentansprüche

1. Elektromagnetischer Linearmotor
mit einem länglichen Stator (1),
mit einem aus einem weichmagnetischen Material bestehenden, zylindrischen Hohlkörper (3) des Stators (1),
mit einem in axialer Richtung verlaufenden Hohlraum des Hohlkörpers (3), mit genau einer an der dem Hohlraum zugewandten Innenseite des Hohlkörpers (1) angeordneten Magnetspule (4) des Stators (1), deren Wicklungen eines elektrischen Leiters den Hohlraum einschließen,
mit mindestens einem in dem Stator (1) linear beweglichen Läufer (2),
mit einem mit axialer Magnetisierung ausgestatteten Permanentmagneten (7, 10) des Läufers (2),
mit einem ersten Abschnitt (14) an einem ersten Ende des zylindrischen Hohlkörpers (3) und einem zweiten Abschnitt (15) an dem dem ersten Ende abgewandten zweiten Ende des zylindrischen Hohlkörpers (3),
mit einem gleich großen oder unterschiedlichen Querschnitt des in axialer Richtung verlaufenden, durch den Hohlkörper begrenzten Hohlraums im ersten und im zweiten Abschnitt (14, 15),
mit genau einem dritten Abschnitt (5) des zylindrischen Hohlkörpers (3) zwischen dem ersten und dem zweiten Abschnitt (14, 15),
wobei der dritte Abschnitt (5) des zylindrischen Hohlkörpers genau einen ringförmigen Statorpolschuh (5) aufweist, der mit axialem Abstand zu der Magnetspule (4) an der Innenseite des zylindrischen Hohlkörpers (3) angeordnet ist, mit einem im Hohlraum des zylindrischen Hohlkörpers (3) angeordneten Hüllrohr (6), wobei die Wicklungen der Magnetspule (4) um das Hüllrohr (6) gewickelt sind und das Hüllrohr (6) aus einem nicht-ferromagnetischen Material besteht, wobei der Statorpolschuh (5) zwischen dem Hohlkörper (3) und dem Hüllrohr (6) angeordnet ist,
**gekennzeichnet durch** einen Querschnitt des axial verlaufenden, durch den Hohlkörper (3) begrenzten Hohlraums im dritten Abschnitt (5), der kleiner ist als der Querschnitt des Hohlraums im ersten Abschnitt (14) und als der Querschnitt des Hohlraums im zweiten Abschnitt (15).

2. Elektromagnetischer Antrieb nach Anspruch 1, **dadurch gekennzeichnet, dass** die Magnetspule (4) an dem ersten oder zweiten Abschnitt (14, 15) des zylindrischen Hohlkörpers (3) angeordnet ist.

3. Elektromagnetischer Linearantrieb nach Anspruch 1 oder 2, **dadurch gekennzeichnet, dass** der zylindrische Hohlkörper als Rohr (3), insbesondere als Statorrückschlussrohr, mit kreisförmigem Querschnitt ausgebildet ist.

4. Elektromagnetischer Linearmotor nach Anspruch 3, **dadurch gekennzeichnet, dass** das Rohr (3) und der ringförmige Statorpolschuh (5) koaxial angeordnet sind.

5. Elektromagnetischer Linearmotor nach Anspruch 1, **dadurch gekennzeichnet, dass** der Statorpolschuh (5) aus einem weichmagnetischen Material besteht.

6. Elektromagnetischer Linearmotor nach einem der vorhergehenden Ansprüche, **dadurch gekennzeichnet, dass** der dritte Abschnitt (5) des zylindrischen Hohlkörpers (3) eine höhere magnetische Permeabilität aufweist als der erste und der zweite Abschnitt.

7. Elektromagnetischer Linearmotor nach einem der vorhergehenden Ansprüche, **dadurch gekennzeichnet, dass** der Läufer (2) mit weichmagnetischen Läuferpolschuhen (8, 9, 11) ausgestattet ist.

8. Elektromagnetischer Linearmotor nach Anspruch 7, **dadurch gekennzeichnet, dass** die Läuferpolschuhe (8, 11) an den axialen Enden des Läufers (2) angeordnet sind.

9. Elektromagnetischer Linearmotor nach einem der vorhergehenden Ansprüche, **dadurch gekennzeichnet, dass** der Läufer (2) mit einem zweiten Permanentmagneten (10) mit axialer Magnetisierung ausgestattet ist.

10. Elektromagnetischer Linearmotor nach einem der vorhergehenden Ansprüche, **dadurch gekennzeichnet, dass** der Läufer (2) in axialer Richtung einen Hohlraum zur Aufnahme von Bauteilen aufweist.

## Claims

1. Electromagnetic linear motor
with a longitudinal stator (1),
with a cylindrical hollow stator body (3) made of a magnetically soft material,
with a hollow space running axially through the hollow body (3),
with exactly one magnetic coil (4) of the stator (1) arranged on the inside of the hollow body (3) facing the hollow space, the windings, which consist of an electrical conductor, enclose the hollow space,
with at least one rotor (2) linearly movable in the stator (1),
with an axially magnetized permanent magnet (7, 10) of the rotor (2),
with a first segment (14) at a first end of the cylindrical hollow body (3) and a second segment (15) at the second end of the cylindrical body (3) facing away from the first end,
with an equally large or differing cross section of the axially running hollow space limited by the hollow body in the first and the second segment (14, 15), with exactly one third segment (5) of the cylindrical hollow body (3) between the first and second segment (14, 15),
wherein the third segment (5) of the cylindrical hollow body comprises exactly one ring-shaped stator terminal shoe (5) that is arranged so that it is spaced axially in relation to the magnetic coil on the inside of the cylindrical hollow body,
with a jacket tube (6) arranged in the hollow space of the hollow body (3), wherein the windings of the magnetic coil (4) are wound around the jacket tube (6) and the jacket tube (6) is made of a non-ferromagnetic material,
wherein the stator terminal shoe (5) is arranged between the hollow body (3) and the jacket tube (6),
**characterized in**
a cross section of the axially running hollow space limited by the hollow body (3) in the third segment (5) that is smaller than the cross section of the hollow space in the first segment (14) and than the cross section of the hollow space in the second segment (15).

2. Electromagnetic drive according to claim 1, **characterized in that** the magnetic coil (4) is arranged on the first or second segment (14, 15) of the cylindrical hollow body (3).

3. Electromagnetic linear drive according to claim 1 or claim 2, **characterized in that** the cylindrical hollow body is designed as a tube (3), in particular a stator backing tube with a circular cross section.

4. Electromagnetic linear motor according to claim 3, **characterized in that** the tube (3) and the ring-shaped stator terminal shoe (5) are arranged coaxially.

5. Electromagnetic linear motor according to claim 1, **characterized in that** the stator terminal shoe (5) is made of a magnetically soft material.

6. Electromagnetic linear motor according to one of the previous claims, **characterized in that** the third segment (5) of the cylindrical hollow body (3) features a greater magnetic permeability than the first and second segments.

7. Electromagnetic linear motor according to one of the previous claims, **characterized in that** the rotor (2) is equipped with magnetically soft rotor terminal shoes (8, 9, 11).

8. Electromagnetic linear motor according to claim 7, **characterized in that** the rotor terminal shoes (8, 11) are arranged at the axial ends of the rotor (2).

9. Electromagnetic linear motor according to one of the previous claims, **characterized in that** the rotor (2) is equipped with a second permanent magnet (10) with axial magnetization.

10. Electromagnetic linear motor according to one of the previous claims, **characterized in that** the rotor (2) features an axially running hollow space for accommodating parts.

## Revendications

1. Moteur linéaire électromagnétique
avec un stator (1) de forme allongée,
avec un corps creux cylindrique (3) de stator (1), composé d'un matériau magnétique doux,
avec un espace creux du corps creux (3) s'étendant dans le sens axial, avec précisément une bobine d'électro-aimant (4) de stator (1) disposée sur la face intérieure du corps creux (1) orientée vers l'espace creux et dont les spires d'un conducteur électrique entourent ledit espace creux, avec au moins un induit (2) linéairement mobile dans le stator (1),
avec un aimant permanent à magnétisation axiale (7, 10) de l'induit (2), avec une première partie (14) au niveau d'une première extrémité du corps creux cylindrique (3) et une deuxième partie (15) au niveau de la deuxième extrémité du corps creux cylindrique (3) située à l'opposé de la première extrémité,
avec une section transversale de taille identique ou différente de l'espace creux s'étendant dans le sens axial et limité par le corps creux dans la première et la deuxième partie (14, 15),
avec précisément une troisième partie (5) du corps creux cylindrique (3) entre la première et la deuxième partie (14, 15),
la troisième partie (5) du corps creux cylindrique présentant précisément un épanouissement polaire de stator de forme annulaire (5) disposé sur la face intérieure du corps creux cylindrique (3) à une distance axiale de la bobine d'électro-aimant (4), avec une gaine (6) disposée dans l'espace creux du corps creux cylindrique (3), les spires de la bobine d'électroaimant (4) étant enroulées autour de la gaine (6) et la gaine (6) étant composée d'un matériau non ferromagnétique, l'épanouissement polaire de stator (5) étant disposé entre le corps creux (3) et la gaine (6),
**caractérisé par** une section transversale de l'espace creux s'étendant dans le sens axial et limité par le corps creux (3) dans la troisième partie (5), qui est plus petite que la section transversale de l'espace creux dans la première partie (14) et que la section transversale de l'espace creux dans la deuxième partie (15).

2. Entraînement linéaire électromagnétique selon la revendication 1, **caractérisé en ce que** la bobine d'électro-aimant (4) est disposée au niveau de la première ou de la deuxième partie (14, 15) du corps creux cylindrique (3).

3. Entraînement linéaire électromagnétique selon la revendication 1 ou 2, **caractérisé en ce que** le corps creux cylindrique est un tube (3), en particulier une culasse de stator, qui présente une section transversale de forme circulaire.

4. Moteur linéaire électromagnétique selon la revendication 3, **caractérisé en ce que** le tube (3) et l'épanouissement polaire de stator de forme annulaire (5) sont disposés de manière coaxiale.

5. Moteur linéaire électromagnétique selon la revendication 1, **caractérisé en ce que** l'épanouissement polaire de stator (5) est composé d'un matériau magnétique doux.

6. Moteur linéaire électromagnétique selon l'une quelconque des revendications précédentes, **caractérisé en ce que** la troisième partie (5) du corps creux cylindrique (3) présente une perméabilité magnétique plus élevée que la première et la deuxième partie.

7. Moteur linéaire électromagnétique selon l'une quelconque des revendications précédentes, **caractérisé en ce que** l'induit (2) est muni d'épanouissements polaires d'induit magnétiques doux (8, 9, 11).

8. Moteur linéaire électromagnétique selon la revendication 7, **caractérisé en ce que** les épanouissements polaires d'induit (8, 11) sont disposés aux extrémités axiales de l'induit (2).

9. Moteur linéaire électromagnétique selon l'une quelconque des revendications précédentes, **caractérisé en ce que** l'induit (2) est muni d'un deuxième aimant permanent (10) à magnétisation axiale.

10. Moteur linéaire électromagnétique selon l'une quelconque des revendications précédentes, **caractérisé en ce que** l'induit (2) présente, dans le sens axial, un espace creux pour loger des composants.
